# EUROPÄISCHE PATENTSCHRIFT

(11) **EP 0 649 036 B1**
(45) Veröffentlichungstag und Bekanntmachung des Hinweises auf die Patenterteilung: **11.11.1998**
(21) Anmeldenummer: 94112491.9
(22) Anmeldetag: 10.08.1994
(51) Int. Cl.: G02B 5/08, G02B 7/182, H01Q 15/14

(54) **Grosser optischer Spiegel in kombinierter Sandwichbauweise**
Large optical mirror composite sandwich construction
Miroir optique de grande taille en construction sandwich composite

(30) Priorität: 17.08.1993 DE 4327564
(43) Veröffentlichungstag der Anmeldung: 19.04.1995
(73) Patentinhaber: DORNIER GmbH, 88039 Friedrichshafen (DE)
(72) Erfinder: Sippel, Rudolf, Dipl.-Ing., D-88677 Markdorf (DE); Stute, Thomas, Dipl.-Ing., D-88677 Markdorf (DE)
(74) Vertreter: Landsmann, Ralf, Dipl.-Ing.

(56) Entgegenhaltungen:
- EP-A- 0 558 991
- DE-A- 3 606 547
- DE-A- 3 723 245
- FR-A- 2 345 736
- GB-A- 2 077 938
- US-A- 3 912 380
- US-A- 4 353 947
- PATENT ABSTRACTS OF JAPAN vol. 12, no. 388 (P-771) 17. Oktober 1988 & JP-A-63 131 102 (MITSUBISHI ELECTRIC) 3. Juni 1988
- PROC. OF THE SPIE, Bd.1113, 1989, BELLINGHAM, US Seiten 195 - 203 RATHER ET AL.

## Beschreibung

Die Erfindung betrifft einen großen optischen Spiegel in kombinierter Sandwichbauweise. Mit dieser Bauweise können große Spiegel mit besonders geringem Eigengewicht hergestellt werden.
Große optische Spiegel werden zum Beispiel benötigt für astronomische Teleskope, zur Übertragung von Laserstrahlen oder zur Konzentration der Sonnenstrahlung. Grundsätzliche Anforderungen für diese Anwendungen sind extreme Formbeständigkeit unter allen auftretenden Umweltbedingungen und geringes Gewicht.
Bisher wurden große Spiegelstrukturen zumeist aus einem einzigen Material gebaut. Als Materialien wurden meist Metalle, Gläser und Quarzglas verwendet. Als am besten geeignete Materialien erwiesen sich Quarzglas und Glaskeramik mit niedrigem Wärmeausdehnungskoeffizienten.
Um die Spiegelmasse zu verringern, wurden auch verschiedene Typen von Sandwichbauweisen bekannt. Als Sandwichkern wurden sowohl Hartschäume als auch Waben vorgeschlagen. Wichtige Anforderungen für die hier benötigten Sandwichkerne sind geringes Gewicht, geringe Wärmedehnung und große Gleichmäßigkeit.
Als Hartschaumkernmaterial wurden zum Beispiel Glasschaum oder Mineralschaum vorgeschlagen. Störend an diesen Schäumen sind die große Wärmedehnung und das hohe Gewicht.

Leichte Wabenkerne mit geringer Wärmedehnung lassen sich nur mit großen Zellweiten herstellen. Bei allen Sandwichspiegeln mit Wabenkern besteht die Gefahr, daß die Spiegeloberfläche infolge der Kernstruktur eine unzulässige Welligkeit besitzt. Diese Welligkeit wird geringer, wenn die Sandwichdeckschicht dicker ist. Die Spiegelmasse wird durch dicke Deckschichten allerdings erhöht.

**DE-A-3 723 245** offenbart einen optischen Spiegel in kombinierter Sandwichbauweise bestehend aus den folgenden Bauteilen:
einer rückwärtigen Sandwichdeckschicht aus kohlefaserverstärktem Kunststoff,
einem Wabenkern aus kohlefaserverstärktem Kunststoff, der auf die Vorderseite der rückwärtigen Sandwichdeckschicht aufgeklebt ist,
einer vorderen Deckschicht aus kohlefaserverstärktem Kunststoff, die auf die Vorderseite des Wabenkerns aufgeklebt ist,
einer Spiegelträgerschicht aus Glaskeramik, die auf die Vorderseite der vorderen Deckschicht aufgeklebt ist und
einer metallischen Reflexionsschicht auf der Vorderseite der Spiegelträgerschicht.

**SPIE vol. 1113** Reflective Optics II (1989), Seiten 195-203 zeigt einen Wabenkern mit dreieckigem Querschnitt.

In **JP 58-169 102** wird ein Papierwabenkern mit zwei Deckschichten aus faserverstärktem Kunststoff mit Polyesterharzmatrix verklebt. Aufgrund des zur Verklebung nötigen äußeren Druckes wird die Wabe oberflächlich in das Harz der Deckschichten eingedrückt. Es entstehen dabei Kleberkehlen an den Wabenstegen. Dieses Eindrücken in das Harz verhindert nicht das Durchzeichnen des Wabenkerns auf dem Spiegel.

Der Erfindung liegt die Aufgabe zugrunde, einen großen optischen Spiegel in Sandwichbauweise zu schaffen, bei dem ein Durchzeichnen des Wabenkerns auch bei größeren Zellweiten und dünneren Deckschichten vermieden wird.

Diese Aufgabe wird durch den Gegenstand des Patentanspruchs 1 oder den des Patentanspruchs 2 gelöst. Vorteilhafte Ausgestaltungen der Erfindung sind Gegenstand von Unteransprüchen.

Die Erfindung wird nachfolgend anhand von Figuren erläutert.

Es zeigen:
- Fig. 1: einen Spiegel gemäß Anspruch 1, der in einem Teilbereich aufgeschnitten dargestellt ist,
- Fig. 2: den Aufbau des Spiegels aus Fig. 1 in einem vergrößerten Ausschnitt,
- Fig. 3: die Bauteile des Spiegels aus Fig. 1 in Explosionsdarstellung,
- Fig. 4: einen Spiegel gemäß Anspruch 2,
- Fig. 5: den Spiegel von Fig. 4 in Schnittdarstellung und
- Fig. 6: den Spiegel von Fig. 4 in Explosionsdarstellung.

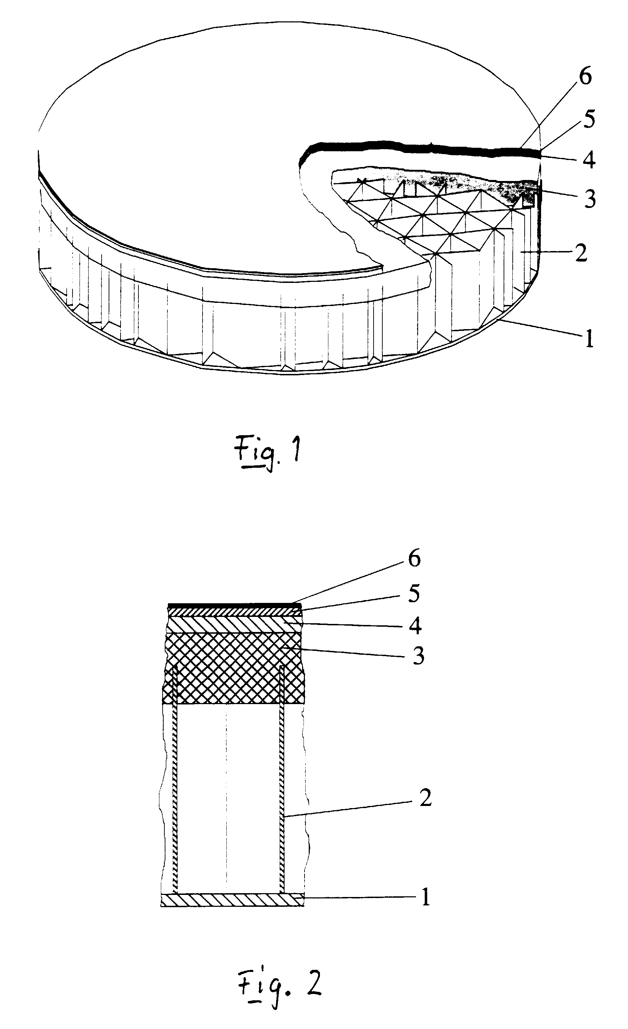

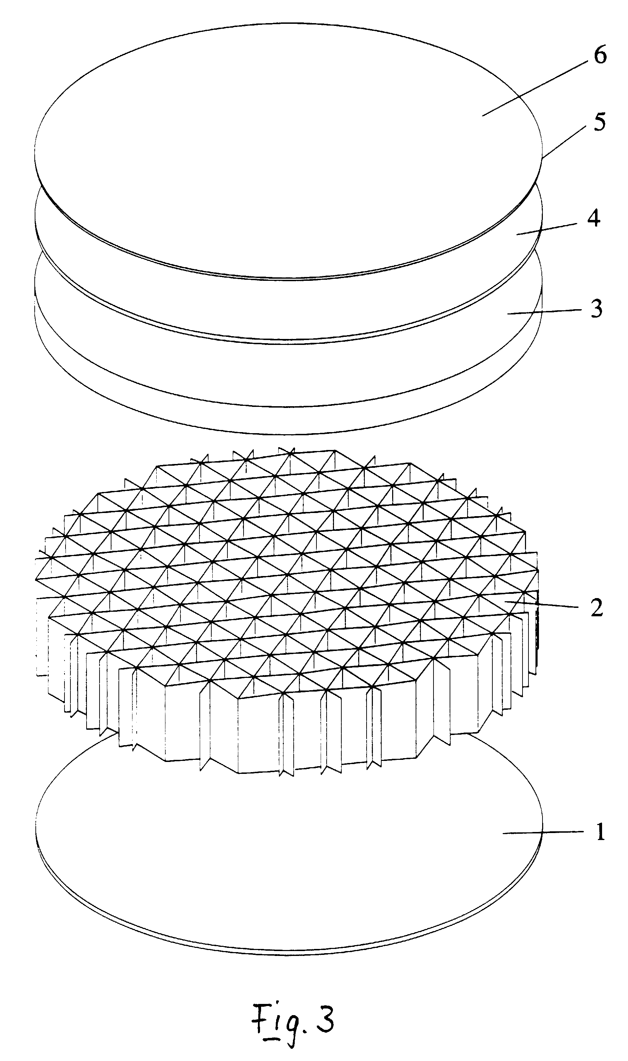

Beim großen optischen Spiegel von Fig. 1 bis 3 bestehen die rückwärtige Sandwichdeckschicht **1**, der Wabenkern 2 sowie die vordere Deckschicht **4** vorzugsweise aus kohlefaserverstärktem Kunststoff. Dieses Material ist wegen seiner geringen Wärmedehnung, großer Steifigkeit und niedrigem Gewicht besonders geeignet.
Wenn Steifigkeit oder Wärmedehnung der einzelnen Bauteile bestimmte Vorzugsrichtungen besitzen, können infolge von Umgebungseinflüssen systematische Verformungsfehler des Spiegels auftreten. Eine typischer Fehlerart ist der Astigmatismus. Es wurde daher darauf geachtet, daß die Eigenschaften der Teile **1, 2** und **4** in jeder Richtung parallel zur Spiegeloberfläche gleich sind.
Der Aufbau der Laminate der Deckschichten 1 und 4 wurden so festgelegt, daß gleiche Laminateigenschaften in jeder Richtung vorliegen (Isotropie).

Die Zellen des Wabenkerns **2** bestehen aus gleichseitigen Dreiecken. Die Zellwände sind identisch aufgebaut und gleich dick. Das Laminat der Zellwände wurde so ausgewählt, daß die Eigenschaften in jeder Richtung gleich sind. Bei dieser Bauweise erfüllt der Wabenkem die Forderungen nach gleicher Steifigkeit und gleicher Wärmedehnung in jeder Richtung parallel zur Spiegeloberfläche (Isotropie).

Die rückwärtige Deckschicht **1** ist mit dem Wabenkern **2** verklebt. Der Wabenkern **2** ist bis zu einer gewissen Tiefe, beispielsweise 5 bis 10 mm, in die Druckverteilungsschicht **3**, deren Dicke beispielsweise 15 bis 20 mm beträgt, eingedrückt und mit dieser verklebt. Die Druckverteilungsschicht **3** besteht vorzugsweise aus Kohleschaum. Dieses Material zeichnet sich durch niedrige Dichte und relativ geringe Wärmedehnung aus. Alternativ kann die Druckverteilungsschicht aus Glasschaum oder keramischem Schaum bestehen. Die Druckverteilungsschicht **3** aus Hartschaum verhindert das Durchzeichnen des Wabenkerns auf dem Spiegel. Die Druckverteilungsschicht **3** ist auf ihrer Vorderseite mit der vorderen Deckschicht **4** verklebt. Die vordere Deckschicht **4** ist auf ihrer Vorderseite mit der Spiegelträgerschicht **5** verklebt. Die Spiegelträgerschicht **5** besteht vorzugsweise aus Glaskeramik mit niedrigem Ausdehnungskoeffizienten.

Die vordere Oberfläche der Spiegelträgerschicht **5** ist optisch poliert und mit der Reflexionsschicht **6** beschichtet. Die Reflexionsschicht **6** besteht vorzugsweise aus einem Metall und wird beispielweise durch Bedampfen aufgebracht.

Die Ausführungen der Erfindung gemäß Anspruch 2 werden Anhand der Fig. 4 bis 6 erläutert.

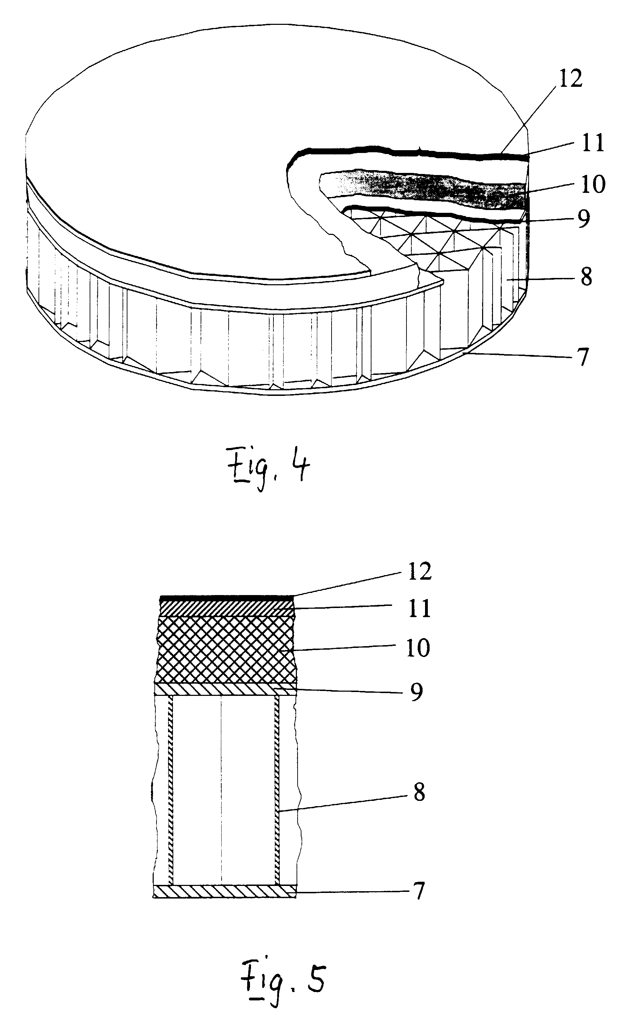

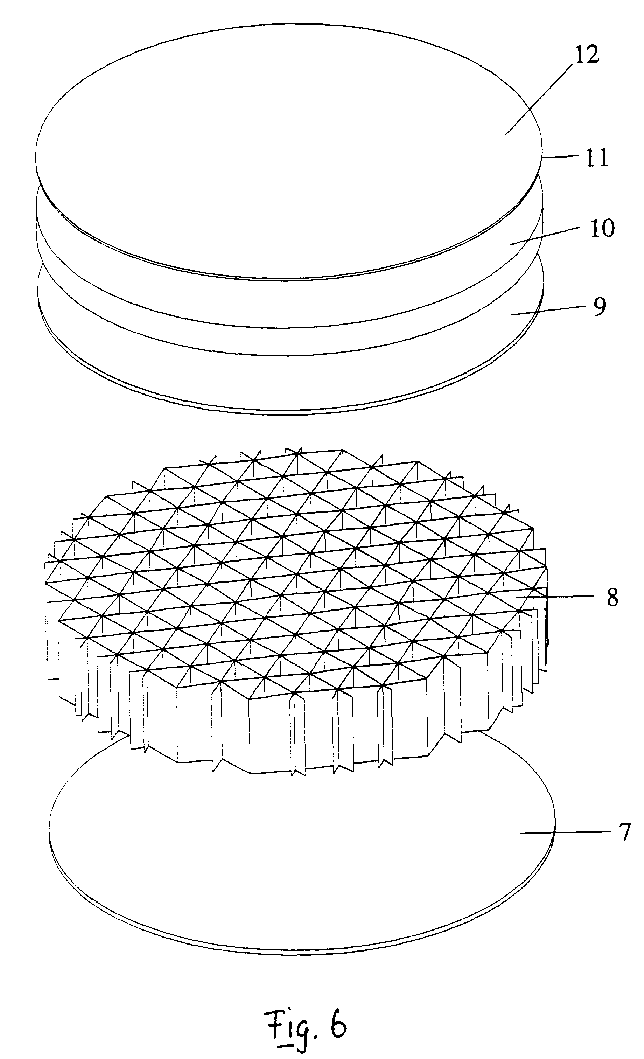

Fig. 4 zeigt einen Spiegel gemäß Anspruch 2. Um den Aufbau deutlicher erkennbar zu machen, wurde die Struktur in einem Teilbereich aufgeschnitten dargestellt. Fig. 5 zeigt den Aufbau des Spiegels aus Fig. 4 in einem vergrösserten Ausschnitt. Fig. 6 zeigt die Bauteile des Spiegels aus Fig. 4 in Explosionsdarstellung.

Die rückwärtige Sandwichdeckschicht **7**, der Wabenkern **8** sowie die vordere Deckschicht 9 bestehen vorzugsweise aus kohlefaserverstärktem Kunststoff.

Der Aufbau der Laminate der Deckschichten **7** und **9** wurden so festgelegt, daß gleiche Laminateigenschaften in jeder Richtung vorliegen (Isotropie). Die Zellen des Wabenkerns **8** bestehen aus gleichseitigen Dreiecken. Die Zellwände sind identisch aufgebaut und gleich dick. Das Laminat der Zellwände wurde so ausgewählt, daß die Eigenschaften in jeder Richtung gleich sind. Bei dieser Bauweise erfüllt der Wabenkern die Forderungen nach gleicher Steifigkeit und gleicher Wärmedehnung in jeder Richtung parallel zur Spiegeloberfläche (Isotropie).

Die rückwärtige Deckschicht **7** ist mit dem Wabenkern **8** verklebt. Der Wabenkern **8** ist auf seiner Vorderseite mit der vorderen Deckschicht **9** verklebt. Die vordere Deckschicht **9** ist auf ihrer Vorderseite mit der Druckverteilungsschicht **10** verklebt. Die Druckverteilungsschicht **10** besteht vorzugsweise aus Kohleschaum.
Die Druckverteilungsschicht **10** ist auf ihrer Vorderseite mit der mit der Spiegelträgerschicht **11** verklebt. Die Spiegelträgerschicht **11** besteht vorzugsweise aus Glaskeramik mit niedrigem Ausdehnungskoeffizienten. Die vordere Oberfläche der Spiegelträgerschicht **11** ist optisch poliert und mit der Reflexionsschicht **12** beschichtet. Die Reflexionsschicht **12** besteht vorzugsweise aus einem Metall und wird beispielweise durch Bedampfen aufgebracht.

## Patentansprüche

1. Großer optischer Spiegel in kombinierter Sandwichbauweise bestehend aus den folgenden Bauteilen:
a) einer rückwärtigen Sandwichdeckschicht (**1**) aus kohlefaserverstärktem Kunststoff,
b) einem Wabenkern (**2**) mit dreieckigem Zellquerschnitt aus kohlefaserverstärktem Kunststoff, der auf die Vorderseite der rückwärtigen Sandwichdeckschicht (**1**) aufgeklebt ist,
c) einer Druckverteilungsschicht (**3**) aus Kohleschaum oder Glasschaum oder keramischem Schaum, die mit der Vorderseite des Wabenkerns verklebt ist, wobei der Wabenkern (**2**) ein Stück weit in die Rückseite der Druckverteilungsschicht (**3**) eingedrückt ist,
d) einer vorderen Deckschicht (**4**) aus kohlefaserverstärktem Kunststoff, die auf die Vorderseite der Druckverteilungsschicht (**3**) aufgeklebt ist,
e) einer Spiegelträgerschicht (**5**) aus Glaskeramik, die auf die Vorderseite der vorderen Deckschicht (**4**) aufgeklebt ist und
f) einer metallischen Reflexionsschicht (**6**) auf der Vorderseite der Spiegelträgerschicht (**5**).

2. Großer optischer Spiegel in kombinierter Sandwichbauweise bestehend aus den folgenden Bauteilen:
a) einer rückwärtigen Sandwichdeckschicht (**7**) aus kohlefaserverstärktem Kunststoff,
b) einem Wabenkern (**8**) mit dreieckigem Zellquerschnitt aus kohlefaserverstärktem Kunststoff, der auf die Vorderseite der rückwärtige Sandwichdeckschicht (**7**) aufgeklebt ist,
c) einer vorderen Deckschicht (**9**) aus kohlefaserverstärktem Kunststoff, die auf die Vorderseite des Wabenkerns (**8**) aufgeklebt ist.,
d) einer Druckverteilungsschicht (**10**) aus Kohleschaum oder Glasschaum oder keramischem Schaum, die auf die Vorderseite der vorderen Deckschicht (**9**) aufgeklebt ist,
e) einer Spiegelträgerschicht (**11**) aus Glaskeramik, die auf die Vorderseite der Druckverteilungsschicht (**10**) aufgeklebt ist, und
f) einer metallischen Reflexionsschicht (**12**) auf der Vorderseite der Spiegelträgerschicht (**11**).

3. Großer optischer Spiegel in kombinierter Sandwichbauweise nach Anspruch 1, wobei die Spiegelträgerschicht (**5**) aus Quarzglas oder aus einem anderen Glas mit niedrigem Wärmeausdehnungskoeffizienten besteht.

4. Großer optischer Spiegel in kombinierter Sandwichbauweise nach Anspruch 1, wobei die Spiegelträgerschicht (**5**) aus Siliziumkarbid besteht.

5. Großer optischer Spiegel in kombinierter Sandwichbauweise nach Anspruch 1, wobei die rückwärtige Deckschicht (**1**), der Wabenkern (**2**) oder die vordere Deckschicht (**4**) aus kohlefaserverstärkter Keramik oder aus kohlefaserverstärktem Kohlenstoff besteht.

6. Großer optischer Spiegel in kombinierter Sandwichbauweise nach Anspruch 2, wobei die Spiegelträgerschicht (**11**) aus Quarzglas oder aus einem anderen Glas mit niedrigem Wärmeausdehnungskoeffizienten besteht.

7. Großer optischer Spiegel in kombinierter Sandwichbauweise nach Anspruch 2, wobei die Spiegelträgerschicht (**11**) aus Siliziumkarbid besteht.

8. Großer optischer Spiegel in kombinierter Sandwichbauweise nach Anspruch 2, wobei die rückwärtige Deckschicht (**7**), der Wabenkern (**8**) oder die vordere Deckschicht (**9**) aus kohlefaserverstärkter Keramik oder aus kohlefaserverstärktem Kohlenstoff besteht.

## Claims

1. Large optical mirror of composite sandwich construction, comprising the following components:
a) a rear sandwich covering layer (1) of carbon fibre reinforced plastics material,
b) a honeycomb core (2) of triangular cell cross-section comprising carbon fibre reinforced plastics material which is adhesively secured to the front face of the rear sandwich covering layer (1),
c) a pressure distribution layer (3) of foamed carbon or foamed glass or ceramics foam, which is adhesively secured to the front face of the honeycomb core, the honeycomb core (2) being pressed a little way into the rear face of the pressure distribution layer (3),
d) a front covering layer (4) of carbon fibre reinforced plastics material, which is adhesively secured to the front face of the pressure distribution layer (3),
e) a mirror supporting layer (5) of glass-ceramics, which is adhesively secured to the front face of the front covering layer (4), and
f) a metallic reflection layer (6) on the front face of the mirror supporting layer (5).

2. Large optical mirror of composite sandwich construction, comprising the following components:
a) a rear sandwich covering layer (7) of carbon fibre reinforced plastics material,
b) a honeycomb core (8) of triangular cell cross-section comprising carbon fibre reinforced plastics material, which is adhesively secured to the front face of the rear sandwich covering layer (7),
c) a front covering layer (9) of carbon fibre reinforced plastics material, which is adhesively secured to the front face of the honeycomb core (8),
d) a pressure distribution layer (10) of foamed carbon or foamed glass or ceramics foam, which is adhesively secured to the front face of the front covering layer (9),
e) a mirror supporting layer (11) of glass-ceramics, which is adhesively secured to the front face of the pressure distribution layer (10), and
f) a metallic reflection layer (12) on the front face of the mirror supporting layer (11).

3. Large optical mirror of composite sandwich construction according to claim 1, wherein the mirror supporting layer (5) consists of quartz glass or of another glass having a low coefficient of thermal expansion.

4. Large optical mirror of composite sandwich construction according to claim 1, wherein the mirror supporting layer (5) consists of silicon carbide.

5. Large optical mirror of composite sandwich construction according to claim 1, wherein the rear covering layer (1), the honeycomb core (2) or the front covering layer (4) consist of carbon fibre reinforced ceramics or of carbon fibre reinforced carbon material.

6. Large optical mirror of composite sandwich construction according to claim 2, wherein the mirror supporting layer (11) consists of quartz glass or of another glass having a low coefficient of thermal expansion.

7. Large optical mirror of composite sandwich construction according to claim 2, wherein the mirror supporting layer (11) consists of silicon carbide.

8. Large optical mirror of composite sandwich construction according to claim 2, wherein the rear covering layer (7), the honeycomb core (8) or the front covering layer (9) consist of carbon fibre reinforced ceramics or of carbon fibre reinforced carbon material.

## Revendications

1. Miroir optique de grande taille à conception composite en sandwich, constitué des éléments structurels suivants :
a) une couche extérieure arrière de sandwich (1) en matière plastique renforcée de fibres de carbone,
b) une âme en nid d'abeilles (2) avec alvéoles à section triangulaire en matière plastique renforcée de fibres de carbone, qui est collée sur la face avant de la couche extérieure arrière de sandwich (1),
c) une couche de répartition de pression (3) en mousse de carbone, en mousse de verre ou en mousse céramique qui est collée sur la face avant de l'âme en nid d'abeilles, l'âme en nid d'abeilles (2) étant partiellement enfoncée dans la face arrière de la couche de répartition de pression (3),
d) une couche extérieure avant (4) en matière plastique renforcée de fibres de carbone, qui est collée sur la face avant de la couche de répartition de pression (3),
e) une couche porte-miroir (5) en vitrocéramique, qui est collée sur la face avant de la couche extérieure avant (4), et
f) une couche métallique réfléchissante (6) sur la face avant de dans lequel la couche porte-miroir (5).

2. Miroir optique de grande taille à conception composite en sandwich, constitué des éléments structurels suivants :
a) une couche extérieure arrière de sandwich (7) en matière plastique renforcée de fibres de carbone,
b) une âme en nid d'abeilles (8) avec alvéoles à section triangulaire en matière plastique renforcée de fibres de carbone, qui est collée sur la face avant de la couche extérieure arrière de sandwich (7),
c) une couche extérieure avant (9) en matière plastique renforcée de fibres de carbone, qui est collée sur la face avant de l'âme en nid d'abeilles (8),
d) une couche de répartition de pression (10) en mousse de carbone, en mousse de verre ou en mousse céramique qui est collée sur la face avant de la couche extérieure avant (9),
e) une couche extérieure avant (11) en vitrocéramique, qui est collée sur la face avant de la couche de répartition de pression (10), et
f) une couche métallique réfléchissante (12) sur la face avant de dans lequel la couche porte-miroir (11).

3. Miroir optique de grande taille à conception composite en sandwich selon la revendication 1, dans lequel la couche porte-miroir (5) est réalisée en verre quartzeux ou en un autre verre à faible coefficient de dilatation thermique.

4. Miroir optique de grande taille à conception composite en sandwich selon la revendication 1, dans lequel la couche porte-miroir (5) est réalisée en carbure de silicium.

5. Miroir optique de grande taille à conception composite en sandwich selon la revendication 1, la couche extérieure arrière (1), l'âme en nid d'abeilles (2) ou la couche extérieure avant (4) sont réalisées en céramique renforcée de fibres de carbone ou en carbone renforcé de fibres de carbone.

6. Miroir optique de grande taille à conception composite en sandwich selon la revendication 2, dans lequel la couche porte-miroir (11) est réalisée en verre quartzeux ou en un autre verre à faible coefficient de dilatation thermique.

7. Miroir optique de grande taille à conception composite en sandwich selon la revendication 2, dans lequel la couche porte-miroir (11) est réalisée en carbure de silicium.

8. Miroir optique de grande taille à conception composite en sandwich selon la revendication 2, dans lequel la couche extérieure arrière (7), l'âme en nid d'abeilles (8) ou la couche extérieure avant (9) sont réalisées en céramique renforcée de fibres de carbone ou en carbone renforcé de fibres de carbone.
